# EUROPÄISCHE PATENTANMELDUNG

(11) **EP 3 685 663 A1**
(43) Veröffentlichungstag der Anmeldung: **29.07.2020**
(21) Anmeldenummer: 19197255.3
(22) Anmeldetag: 13.09.2019
(51) Int. Cl.: A01M 1/22

(54) **ELEKTRISCHE INSEKTENFALLE, INSBESONDERE GEGEN FLUG- UND SPRUNGUNTAUGLICHE INSEKTENSCHÄDLINGE, DIE IN STÄLLEN ODER SCHEUNEN TIERE BEFALLEN**

(30) Priorität: 24.01.2019 CH 922019
(71) Anmelder: Palm, Enrico, 6375 Beckenried (CH)
(72) Erfinder: Palm, Enrico, 6375 Beckenried (CH)

(57) **Zusammenfassung**

Tiere in der Landwirtschaft werden immer wieder von Insekten befallen, verbreiten dadurch Krankheit oder Tod und/oder vermindern damit den Ertrag, den die Tiere bringen sollen (Fleisch, Wolle, Eier...). Unsere Insektenfalle soll die Tiere in Stall und Scheune davor schützen. Dafür werden die Innenräume für Tiere oben und unten rundum durch je zwei elektrisch geladene Drähte oder Litzen (3), die an den Wänden, am Boden und/oder an der Decke verlaufen können, geschützt. Die Elektroleitungen sind in einem, für die auftretenden Insektenschädlinge, spezifischen Abstand (4) von 0,3mm bis 0,8mm auf dem Untermaterial (Wand, Boden, Decke) (1) angebracht. Die Anbringung (2) erfolgt so, dass eine Untertunnelung oder Umgehung der Insektenfalle für die Schädlinge unmöglich wird. Die Leitungen werden mit einem zusätzlichen physischen Schutz (7) versehen, so dass die Tiere und Menschen keinen Stromschlag erleiden können. Die beiden Leitungskreise sind im Innenraum unterbrechungsfrei geführt, so dass eine Umgehung unmöglich wird. Kontaktiert ein Insektenschädling (5) beide Drähte gleichzeitig, wird er durch einen Lichtbogen (6) augenblicklich getötet.

## Beschreibung

Die Erfindung schützt Tiere im Innenbereich (Stall, Scheune, ...) vor flug- und sprungunfähigen Insektenschädlingen (5).

Der Zweck der Erfindung besteht darin, die genannten Insekten zu vernichten, um einen Befall der Tiere, deren Schwächung oder Tod und somit eine Verminderung der Produktion zu verhindern bzw. soweit zu minimieren, so dass keine Verhaltensstörungen der Tiere auftreten und die Produktion nicht beeinträchtigt wird.

Die Erfindung macht damit den Gebrauch von Chemie oder anderen Mitteln obsolet. Ställe müssen nicht immer wieder komplett geräumt, desinfiziert oder mit anderen Mitteln behandelt werden.

Die Anordnung der elektrischen Insektenfalle ist abhängig vom Innenbereich, darin vom Ruhe- und Produktionsbereich und muss somit von Fall zu Fall individuell entschieden werden. Die Stromkreise werden so installiert, dass von ausserhalb keine Schädlinge in den Ruhe-, Produktionsbereich eindringen können. Innerhalb der Räume sollte die Absicherung ausserhalb der Erreichbarkeit der Tiere verlegt werden. Bei z.B. Hühnern ober- und unterhalb des Bereichs der Hühnerstangen.

Schädlinge, die sich bereits am Tierkörper (Wirt) befinden und ihn zwecks Versteck-suchen, Fortpflanzung, Ruhephase verlassen, werden nach dem Überqueren der Schutzvorrichtung (7) auf einen Stromkreis treffen, der sie vernichtet.

Ein Beispiel der Erfindung ist in den Zeichnungen dargestellt und wird nachstehend genauer beschrieben. Es zeigen:

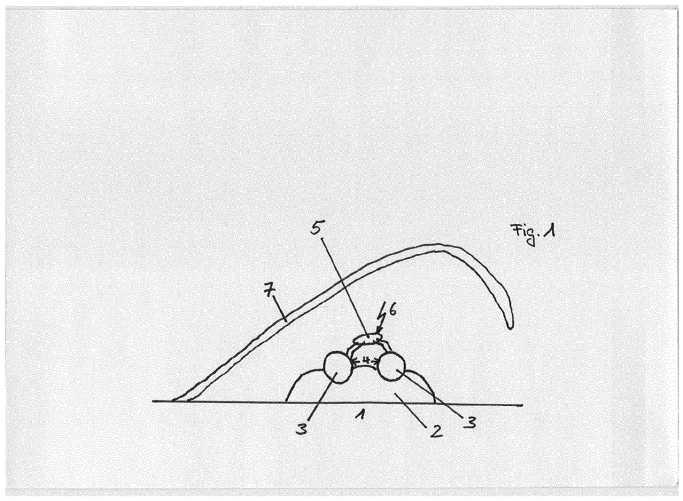

Fig. 1 einen Querschnitt eines Stromkreises mit einem Schädling beschrieben unter Zusammenfassung
Fig. 2 einen Querschnitt der beiden Stromkreise beidseitig von einer Hühnerstange (s. unten)

### Beschreibung des Beispiels:

Freilebende (Wild-)Vögel sind Träger von Insektenschädlingen (5). Diese verlassen bei Gelegenheit den Wirt und finden sie ihn nicht mehr vor, begeben sie sich auf die Suche nach einem neuen Wirt. In diesem spezifischen Fall beziehen wir uns auf Milben (wobei die Erfindung aber auf alle flug- und sprungunfähige Insekten abzielt), die z.B. freilaufende Hühner draussen oder in einem Gehege befallen. Die verschiedenen Arten der Milben verursachen bei starkem Befall der Wirte durch Blutsaugen, Schädigung des Gefieders usw. eine Schwächung, Stress, Aggressionsverhalten usw., was zu Produktionsminderung, -ausfall oder auch zum Tode der Hühner führen kann. Die eingeschleppten Schädlinge vermehren sich in Stall und Scheune in kurzer Zeit explosionsartig, was den Tierhalter zu Massnahmen zwingt (Reinigung, Gifte usw.). Diese Massnahmen müssen vom Tierhalter mehrmals pro Jahr oder öfter durchgeführt werden, um einer Produktionsminderung entgegenzuwirken. Die Erfindung bringt eine nachhaltige Lösung zum Schutz der Tiere und löst den Einsatz von verschiedenen Mitteln oder Gegenmassnahmen ab.

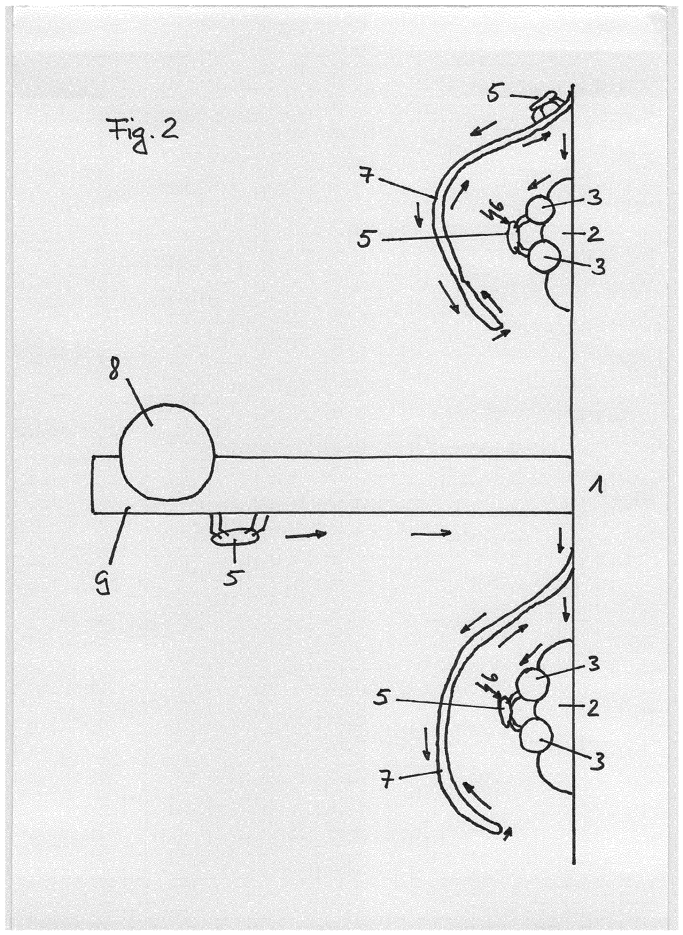

Fig. 2 zeigt den Schutz des Ruhebereichs der Hühner: Hühnerstange (8) mit Halterung (9). Die beiden Stromkreise schützen den Zugang zur Hühnerstange bzw. vernichten die Schädlinge (5) beim Verlassen des Wirts. Die Pfeile zeigen die möglichen Bewegungsrichtungen der Schädlinge (5).

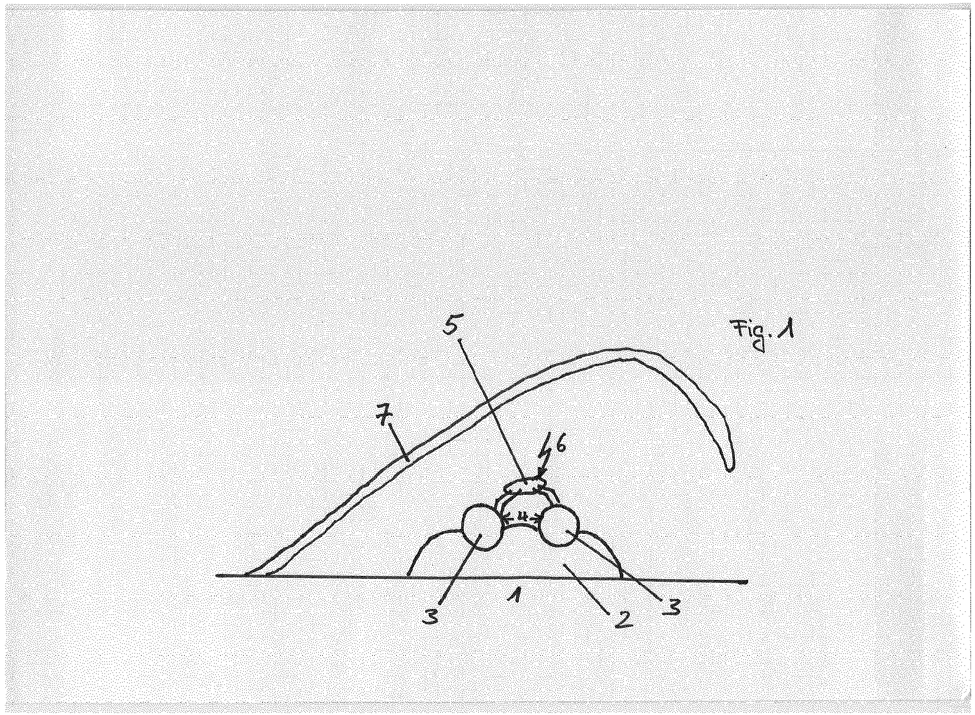

## Patentansprüche

1. Elekrische Insektenfalle gegen flug- und sprungunfähige Insekten

2. Zweiadrige Leitungen unterbrechnungsfrei ringsum - Versiegeln der möglichen Fluchtstellen mit Dichtungsmittel

3. Leitung oben abisoliert, um den Zugang des Insekts zum Draht oder Litze zu gewährleisten.

4. Abstand der Drähte je nach Tierart von 0,3mm bis 0,8mm und entsprechend Spannung und Stromstärke

5. Abdeckung zum Schutz vor Stromschlag für Mensch und Tier.

6. Die Anbringung im Bezug auf Boden, Decke, Sitzstange (drüber & drunter)...
